Europäisches Patentamt

(19) European Patent Office

Office européen des brevets

(11) Numéro de publication : **0 147 363**
**B1**

## (12) FASCICULE DE BREVET EUROPÉEN

(45) Date de publication du fascicule du brevet :
17.05.89

(51) Int. Cl.⁴ : $G\ 02\ B\quad 6/42$

(21) Numéro de dépôt : 84810467.5

(22) Date de dépôt : 25.09.84

(54) Procédé pour positionner une fibre optique par rapport à un autre composant optique et dispositif pour la mise en oeuvre de ce procédé.

(30) Priorité : 05.10.83 FR 8315955

(43) Date de publication de la demande :
03.07.85 Bulletin 85/27

(45) Mention de la délivrance du brevet :
17.05.89 Bulletin 89/20

(84) Etats contractants désignés :
AT BE CH DE FR GB IT LI LU NL SE

(56) Documents cités :
EP-A- 0 100 781
EP-A- 0 129 048
JP-A-57 129 403
PATENTS ABSTRACTS OF JAPAN, vol. 6, no. 2 (P-96)[880], 8 janvier 1982 & JP - A - 56 126 816
PATENTS ABSTRACTS OF JAPAN, vol. 6, no. 225 (P-154)[1103], 10 novembre 1982 & JP - A - 57 129 403

(73) Titulaire : CABLOPTIC S.A.
Rue François-Borel
CH-2016 Cortaillod (CH)

FONDATION SUISSE POUR LA RECHERCHE EN MICROTECHNIQUE
Rue Jaquet-Droz 7
CH-2000 Neuchâtel 7 (CH)

(72) Inventeur : Genequand, Pierre
25, rue Moillebeau
CH-1209 Genève (CH)

(74) Mandataire : Nithardt, Roland
CABINET ROLAND NITHARDT Attn: Cabinet MOSER & CIE Rue Edouard Verdan 15
CH-1400 Yverdon-les-Bains (CH)

**Description**

La présente invention concerne un procédé pour positionner une première pièce telle que par exemple une fibre optique, par rapport à une seconde pièce, telle que par exemple un autre composant optique, dans lequel on monte la première pièce sur un premier support et la seconde pièce sur un second support.

L'assemblage d'éléments de micro-optique tels que les coupleurs de fibres optiques nécessite le positionnement extrêmement précis des pièces à coupler. La précision requise est de l'ordre du μm pour les fibres multimodes et de l'ordre du dixième de μm pour les fibres monomodes. Pour permettre de tels assemblages de manière répétitive, il est indispensable de pouvoir disposer d'une machine capable de saisir les pièces à assembler et de les déplacer l'une par rapport à l'autre en respectant ces précisions.

Les tables de déplacement classiques, à glissières et à pivots, conçues pour des mouvements de relativement grande amplitude, de l'ordre de plusieurs dizaines à plusieurs centaines de millimètres, sont compliquées, coûteuses et mal adaptées aux exigences des petits déplacements de très grande précision (ceux dont l'amplitude ne dépasse pas le millimètre), surtout à cause des problèmes de jeux et d'hystérèse mécaniques aggravés par l'effet des frottements.

Par ailleurs, les pièces des coupleurs optiques doivent habituellement pouvoir être fixées d'une manière permanente dans la position obtenue après leur positionnement mutuel, au moyen d'un collage ou d'un vissage. Pour tenir compte de cette contrainte, et pour éviter un déplacement intempestif des pièces durant l'opération de fixation et d'assemblage, les pièces à coupler peuvent comporter une face plane par laquelle elles sont mises en contact. Le réglage de position est obtenu par glissement relatif dans le plan de contact, soit par translation selon deux axes perpendiculaires, soit par rotation autour d'un axe. Une force d'application réglable est exercée de manière à presser les pièces l'une contre l'autre en contact intime pendant toutes les opérations de positionnement et de fixation de l'assemblage, pour éviter les déformations consécutives à l'assemblage dues notamment au retrait des joints de collage lorsque les pièces ne sont pas en contact direct.

Enfin, la mise en contact intime des pièces à assembler durant l'opération de positionnement relatif dans le plan de contact, a pour conséquence que les déplacements correspondants ne peuvent pas s'effectuer d'une manière continue mais présentent, à l'échelon microscopique, des saccades dues à des forces de freinage engendrées par les frottements.

Un dispositif de ce genre comportant deux supports pour fibres optiques ayant chacun une articulation purement élastique est décrit dans le JP-A-57-129 403. Chaque fibre est logée dans une encoche en V d'une lame fléchissant sous la poussée d'une vis. Il en résulte un mouvement de rotation qui déplace la fibre dans une seule direction transversale, ce qui ne permet pas de compenser des imprécisions éventuelles des positions respectives des encoches ou de la forme plus ou moins circulaire des fibres.

Le EP-A-129 048 montre un support selon le même principe mais comprenant deux lames superposées et approximativement parallèles, dont la première est articulée à un bâti à l'une de ses extrémités et à la seconde à l'extrémité opposée, les deux axes d'articulation étant parallèles entre eux et parallèles à la fibre optique. Les directions et amplitudes de déplacement dans toute direction proche d'un plan passant par les deux axes d'articulation sont donc très restreintes. Le EP-A-100 781 évite cet inconvénient en plaçant les deux lames non pas parallèlement, mais en équerre, avec deux vis respectives de commande qui sont également perpendiculaires. Ceci implique toutefois que la première vis déplace les deux lames, si bien que la seconde lame frotte, avec les saccades qui en résultent, contre sa propre vis de commande montée dans un emplacement fixe. Par ailleurs, les dispositifs illustrés par ces deux documents EP ont pour inconvénient le fait que la direction du déplacement obtenue autour de la seconde articulation dépend sensiblement de la position initiale de celle-ci, donc de la position initiale de la première lame.

La présente invention se propose de pallier les inconvénients des systèmes connus en réalisant un dispositif bien adapté à des micro-déplacements suivant plusieurs composantes de mouvement, qui permet par ailleurs un assemblage des composants après leur positionnement précis en contact l'un avec l'autre, en évitant les défauts de précision dus à l'avance saccadée dont sont responsables les frottements, comportant un bâti, un premier support portant une première pièce telle que par exemple une fibre optique, un second support portant la seconde pièce telle que par exemple un second composant optique et des organes agencés pour permettre le déplacement de l'un des supports relativement à l'autre.

Dans ce but, le procédé selon l'invention est caractérisé en ce que, pour assurer les déplacements d'au moins un des supports, on utilise une combinaison d'un module de translation (51 à 55) comportant deux lames élastiques parallèles entre elles, et d'un module de rotation (56 à 60) comportant deux lames disposées selon des directions convergentes.

Le dispositif selon l'invention est caractérisé en ce que l'un au moins des deux supports est relié au bâti par une combinaison d'un module de translation (51 à 55) comprenant deux lames (12, 13) déformables élastiquement selon une de leurs dimensions, et disposées parallèlement entre elles, et d'un module de rotation (56 à 60) comprenant deux lames (25, 26) déformables élastiquement selon une de leurs dimensions et disposées selon deux directions convergentes.

La présente invention sera mieux comprise en référence à la description d'exemples de réalisation et au dessin annexé dans lequel :

La fig. 1 représente une vue en perspective d'une forme de réalisation préférée d'une articulation à déformation purement élastique telle qu'utilisée dans le cadre de la présente invention,

La fig. 2 représente une vue de dessus d'un module de translation réalisé à l'aide de lames élastiques telles que représentées par la fig. 1,

La fig. 3 représente une vue de dessus d'une première forme de réalisation d'un module de rotation utilisant des lames élastiques telles que représentées par la fig. 1,

La fig. 4 représente une autre forme de réalisation d'un module de rotation utilisant les lames élastiques telles que représentées par la fig. 1,

La fig. 5 illustre une forme de réalisation d'un mécanisme de commande des déplacements du support mobile,

La fig. 6 représente une vue de dessus d'une combinaison d'un module de translation et d'un module de rotation,

La fig. 7 est une vue de dessus d'une combinaison de deux modules de translation,

La fig. 8 représente une vue de dessus d'une forme de réalisation particulière du support mobile,

La fig. 9 représente une vue en coupe transversale du support mobile selon la ligne A-A de la fig. 8,

La fig. 10 représente une vue de dessus illustrant la partie inférieure d'un étau de maintien des pièces à assembler,

La fig. 11 représente une vue en coupe selon la ligne B-B de l'étau de la fig. 10,

La fig. 12 représente une vue en coupe selon la ligne C-C de l'étau de la fig. 10,

La fig. 13 représente un graphique illustrant le déplacement théorique et le déplacement réel des pièces à assembler,

La fig. 14 représente un graphique illustrant le principe de la translation oblique,

La fig. 15 représente un graphique illustrant le déplacement résultant d'une combinaison de translations obliques élémentaires,

La fig. 16 illustre un dispositif agencé pour réaliser les translations obliques correspondant au graphisme de la fig. 15,

La fig. 17 représente le sous-ensemble inférieur d'un dispositif selon l'invention comportant des modules de déplacement combinés et un dispositif de translation oblique, et

La fig. 18 représente le sous-ensemble supérieur de ce dispositif.

La réalisation des mouvements de translation et de rotation dans le plan de contact des pièces à positionner est basée sur l'utilisation modulaire d'articulations à lames flexibles présentant les caractéristiques suivantes :

La lame est encastrée à une extrémité dans une pièce solidaire d'une plaque de base,

La lame est encastrée à l'autre extrémité dans une pièce solidaire d'une plaque mobile,

Les trois dimensions de la lame, soient la longueur $l_o$, la largeur $l_a$ et l'épaisseur $e$ obéissent aux relations $l_o \gg e$, et $l_a \gg e$.

Dans la pratique, $l_o \simeq 100e$ et $l_a \simeq 20e$.

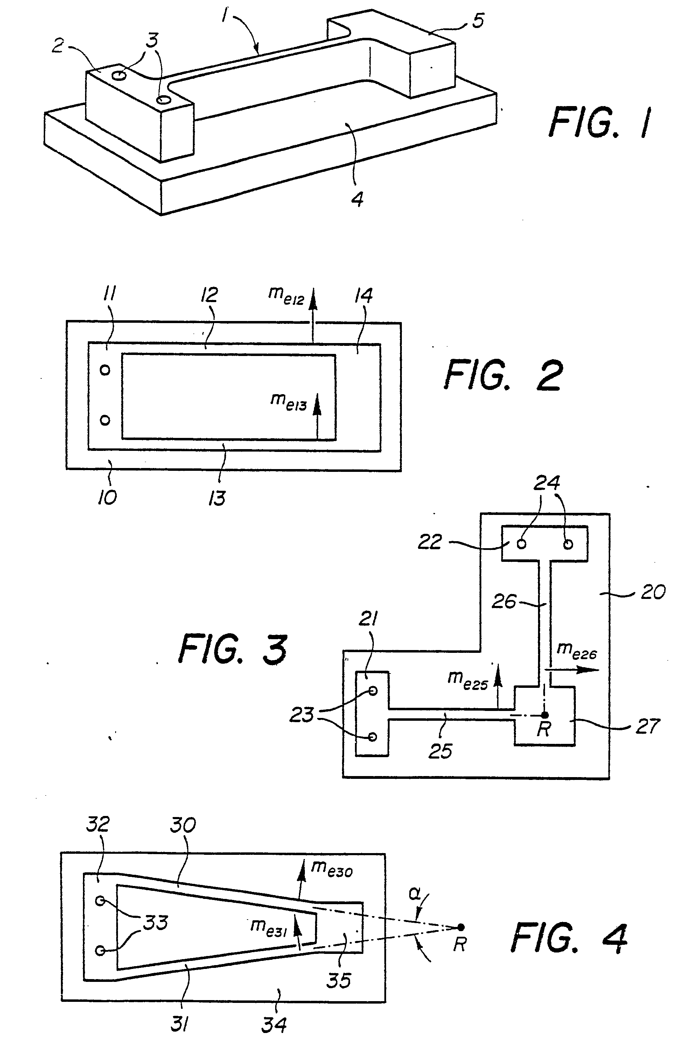

En référence à la fig. 1, l'articulation à déformation purement élastique représentée se compose d'une lame 1 dont une extrémité est reliée à une pièce fixe 2 rendue solidaire au moyen de deux vis 3 d'une plaque de base 4 qui constitue le bâti du dispositif, et dont l'autre extrémité est solidaire d'une pièce mobile 5 qui constitue en elle-même le support mobile d'un composant ou qui est solidaire du support mobile de ce composant.

En vertu des lois de l'élasticité, le déplacement $m_e$ de la pièce mobile 5 dans le sens de l'épaisseur de la lame est relativement aisé grâce à la flexion importante de cette lame dans cette coordonnée, alors que le déplacement $m_a$ selon une direction correspondant à la largeur de la lame reste faible et que le déplacement $m_o$ selon une direction correspondant à la longueur de la lame est négligeable. La valeur exacte des élasticités correspondant à ces trois déplacements est donnée par les expressions suivantes :

$$m_e = \frac{4\,F_e l_o^3}{E l_a\, e^3}$$

$$m_a = \frac{4\,F_a l_o^3}{E e l_a^3}$$

$$m_0 = \frac{F_0 l_0}{E l_a e}$$

où $E$ représente le module d'Young du matériau de la lame, $F_e$ étant la force imposée par exemple par une vis micrométrique de déplacement, $F_a$ dépendant du poids de la plaque mobile et $F_o$ étant une fonction de la friction entre les pièces à positionner.

On notera que le déplacement $m_o$ est beaucoup plus faible que le déplacement $m_e$ ce qui est particulièrement important pour l'indépendance du contrôle des coordonnées $m_o$ et $m_e$. L'effet de $m_a$, intrinsèquement faible, devient négligeable lorsque l'on considère sa projection dans le plan $m_o m_e$.

Les modules de déplacement illustrés par les figures 2, 3 et 4 permettent des déplacements à une coordonnée dans un plan. Pour procéder à des assemblages nécessitant un réglage à une coordonnée, on fixera l'une des pièces à assembler sur le support mobile et l'autre à la plaque de base ou bâti et on commandera le déplacement relatif du support mobile par un dispositif de commande approprié.

La fig. 2 représente un dispositif comportant un bâti 10 sur lequel est montée une pièce fixe 11 qui porte deux lames parallèles 12 et 13 reliées de façon rigide à une pièce 14 solidaire du support mobile ou constituant elle-même ce support mobile. Les lames 12 et 13 étant parallèles entre elles et ayant la même longueur, permettent d'assurer un micro-déplacement en translation $m_{e12} = m_{e13}$ de la pièce mobile 14. Ce type de module de déplacement sera appelé par la suite un module de translation.

Le dispositif représenté par la fig. 3 se compose d'une plaque de base ou bâti 20 portant deux pièces fixes 21 et 22 montées sur le bâti respectivement au moyen de vis 23 et 24 et portant chacune une lame flexible respectivement 25 et 26. Les extrémités des lames 25 et 26 non reliées aux pièces fixes 21 et 22 sont reliées à une plaque mobile 27 qui constitue elle-même le support mobile portant un des composants à assembler tel que par exemple une fibre optique, ou est solidaire de ce support. Les deux lames 25 et 26 sont dans ce cas disposées à angle droit et leur prolongement se coupe en un point R qui définit l'intersection du plan $me_{25}me_{26}$ (définissant respectivement les déplacements élastiques de la lame 25 et de la lame 26) avec l'axe de rotation de la plaque mobile 27. Dans l'exemple représenté, le centre de rotation R est localisé à l'intérieur du pourtour de la plaque mobile. Toutefois, ce centre de rotation peut se trouver à n'importe quel autre endroit dans le plan.

Dans l'exemple illustré par la fig. 4, les deux lames 30 et 31 ont une extrémité solidaire d'une pièce 32 fixée par exemple par deux vis 33 à une plaque de base 34 constituant le bâti et leur autre extrémité reliée à une plaque mobile 35. Le point d'intersection R des axes des deux lames 30 et 31 se trouve en dehors de la plaque mobile, et le module de rotation ainsi réalisé est centré hors de la plaque mobile.

Le module de translation défini en référence à la fig. 2 constitue un cas particulier d'un module de rotation dans lequel le centre de rotation est rejeté à l'infini.

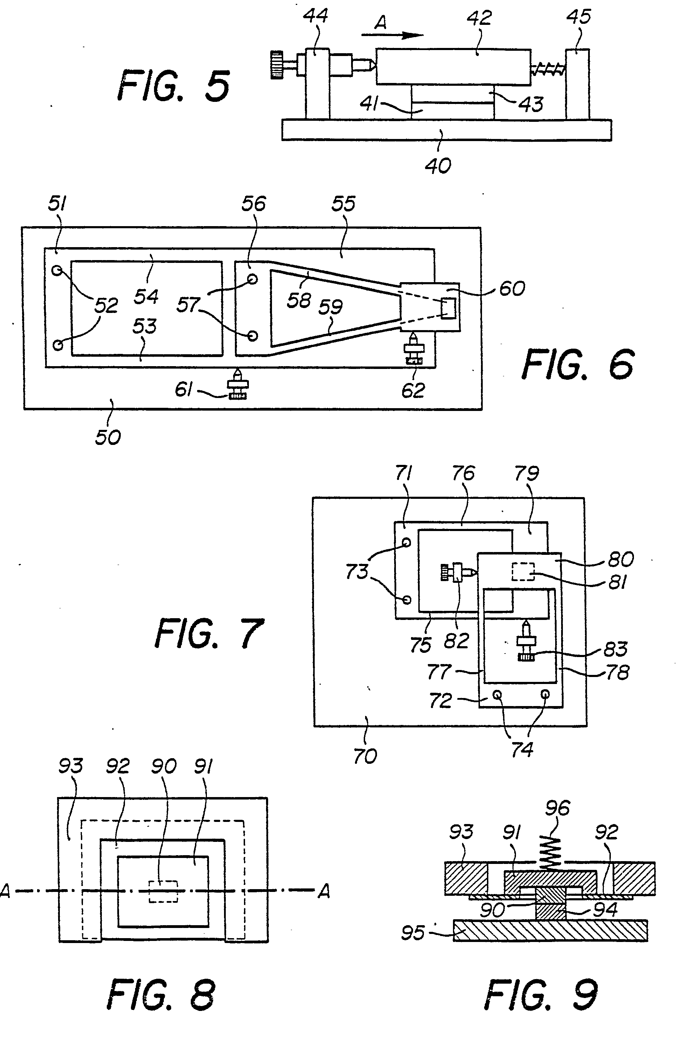

Le dispositif selon la fig. 5 illustre plus particulièrement un mécanisme permettant d'assurer le déplacement d'au moins un des composants par rapport à l'autre. Ce dispositif se compose d'un bâti 40 sur lequel est directement monté un support fixe 41 portant l'un des deux composants à assembler. Une plaque mobile 42 porte le support 43 d'une seconde pièce à positionner par rapport à la première. Les articulations permettant d'assurer le déplacement de la plaque mobile 42 ne sont pas représentées sur cette figure. La plaque de base porte d'une part un dispositif à vis micrométrique 44 qui permet d'exercer sur la plaque mobile 42 une poussée dans le sens de la flèche A. Sur le côté opposé au dispositif à vis micrométrique 44, est montée une butée à ressort d'appui 45. Ce dispositif permet d'assurer le contrôle des déplacements à une coordonnée dans un plan pour tous les modules à deux articulations selon les figures 2, 3 et 4.

Pour obtenir un contrôle de déplacement selon plusieurs coordonnées, il est possible de combiner les modules de déplacement à une coordonnée soit en série soit en parallèle. Une combinaison en série est représentée par la fig. 6 qui illustre un dispositif comprenant une plaque de base 50 sur laquelle est directement montée une première pièce fixe 51 fixée à la plaque de base par des vis 52. Cette pièce fixe 51 sert de support aux extrémités de deux lames parallèles 53 et 54 dont les autres extrémités sont solidaires d'une première plaque mobile 55. Ces différents éléments forment entre eux un module de translation tel que défini précédemment. La plaque mobile 55 sert de support à une pièce 56 fixée sur la plaque 55 au moyen de vis 57. La pièce 56 porte deux lames 58 et 59 dont les autres extrémités sont solidaires d'une seconde plaque mobile 60 qui sert de support à une des pièces à assembler ou qui est liée à un tel support. La pièce fixe 56, les lames 58 et 59 et la seconde plaque mobile 60 constituent un module élémentaire de rotation tel que décrit ci-dessus en référence à la fig. 4. Une première vis micrométrique 61 agit sur le module de translation et une seconde vis micrométrique 62 agit sur le module de rotation. L'autre pièce de la paire de pièces à assembler est de préférence directement fixée sur la plaque de base 50.

La fig. 7 représente une combinaison de modules élémentaires disposés en parallèle. Selon cette réalisation, le dispositif comporte une plaque de base 70 portant un premier bloc fixe 71 et un second bloc fixe 72 montés sur la plaque de base par exemple au moyen de vis 73 et 74. Chacun de ces deux blocs 71 et 72 est solidaire de deux lames parallèles respectivement 75, 76 et 77, 78 de deux modules de translation montés perpendiculairement l'un par rapport à l'autre. Les lames 75 et 76 portent une première plaque mobile 79 et les lames 77 et 78 portent une seconde plaque mobile 80. La plaque mobile 79 porte soit directement, soit par l'intermédiaire d'un support approprié, un des composants à assembler (non représenté) tandis que la plaque mobile 80 porte, soit directement soit indirectement par l'intermédiaire d'un support approprié, le second composant 81 à positionner par rapport au premier. Deux dispositifs 82 et 83 de commande micrométrique des déplacements des deux modules de translation sont montés sur la plaque de base 70.

Un autre problème qui se pose lors de ces opérations de positionnement et d'assemblage de composants est celui de la fixation des pièces sur les plaques mobiles ou sur la plaque de base pendant les opérations de micro-déplacement. L'accommodation pour des mouvements perpendiculaires au plan des micro-déplacements de l'une des pièces à assembler par rapport à l'autre nécessite que l'une de ces pièces soit tenue de manière flexible pour ces mouvements mais rigide dans le plan des micro-déplacements. Toutefois, ces mouvements ne doivent plus être permis après la mise en contact des deux pièces, ce qui implique que la seconde pièce mentionnée ne puisse pas se mouvoir perpendiculairement au plan des micro-déplacements. Ces conditions peuvent être remplies en fixant la première pièce, c'est-à-dire celle qui s'accommode par rapport au plan des micro-déplacements, à sa plaque support par l'intermédiaire d'une membrane flexible, disposée sensiblement dans le plan de glissement des micro-déplacements pour minimiser les couples exercés sur cette membrane. La seconde pièce c'est-à-dire celle qui est montée dans une position fixe selon une direction perpendiculaire au plan des micro-déplacements, est fixée directement sur la plaque support. Une pression exercée sur la première pièce perpendiculairement à la membrane permet d'effectuer la mise en contact des deux pièces.

Un tel mode de fixation à membrane est représenté par les figures 8 et 9. Comme le montrent ces figures, une des pièces à assembler 90, constituée par exemple par une fibre optique noyée dans un bloc de résine, ou montée dans un support rigide, est montée rigidement sur un porte-pièce 91. Ce porte-pièce 91 est monté par collage, rivetage, vissage ou tout autre moyen connu, à une membrane 92 constituée par exemple par une pièce rectangulaire découpée dans une feuille d'un matériau élastique ou par des lames fines ayant des propriétés élastiques relativement importantes selon leur épaisseur. La membrane 92 est assemblée par des moyens connus à une plaque mobile 93 qui se compose, dans l'exemple représenté, d'un cadre rigide en forme de U. La seconde pièce 94 destinée à être assemblée à la pièce 90 est solidaire de la plaque de base 95. Un ressort d'accommodation 96 exerce une poussée sur la partie centrale du porte-pièce 91.

Les pièces 90 et 94 sont fixées respectivement au porte-pièce et à la plaque de base par collage, par dépression d'air, si la surface d'appui est suffisante, ou par des étaux conventionnels. Cette manière de procéder peut comporter des inconvénients dus au fait que les pièces collées sont difficiles à détacher ou que les étaux peuvent constituer des pièces encombrantes.

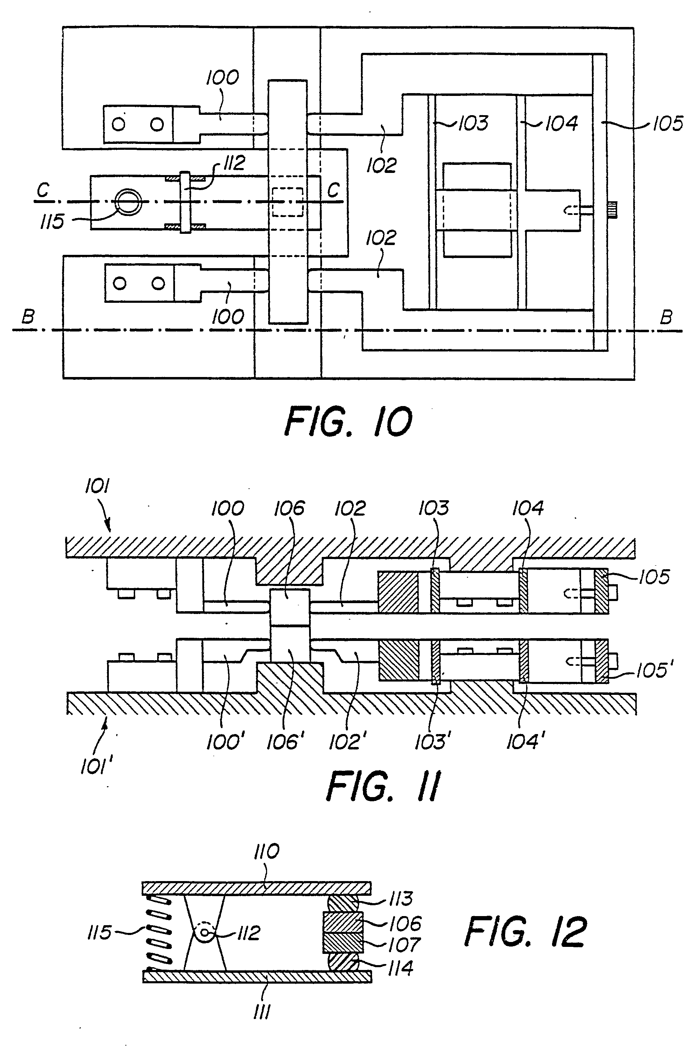

Pour remédier à cet inconvénient, on propose un second mode de saisie des pièces illustré par les figures 10, 11 et 12, où la membrane et le porte-pièce sont remplacés par des lames de saisie élastiques, flexibles perpendiculairement au plan des micro-déplacements.

Le dispositif représenté comporte une première série de lames de saisie 100 fixée directement à la plaque-support 101 à accommodation et une seconde série de lames de saisie 102 fixée à la plaque-support par l'intermédiaire de modules de translation à lames élastiques 103 et 104 dont la direction de translation est orientée parallèlement aux lames de saisie. Un ressort de serrage 105 permet de pousser les lames de la seconde série de lames 102 en direction de la première série de lames 100, afin de bloquer la pièce à assembler 106, dans le plan des micro-déplacements, tout en lui conservant la faculté d'accommodation perpendiculaire par la flexibilité des lames de saisie.

L'autre pièce à assembler 107, peut être saisie par un dispositif similaire comportant une première série de lames de saisie 100', fixée directement à la plaque-support 101', et une seconde série de lames de saisie 102', fixée à la plaque-support par l'intermédiaire de modules de translation à lames élastiques 103' et 104'. Un ressort de serrage 105' permet de pousser les lames de la seconde série de lames 102' en direction de la première série de lames 100'. Les lames de saisie 100' et 102' sont rigides de telle manière que cette seconde pièce à assembler 107 soit complètement bloquée sur sa plaque-support 101'.

La pince de pression représentée par la fig. 12 comporte deux mâchoires 110 et 11 articulées l'une par rapport à l'autre autour d'une charnière 112. Les pièces à assembler 106 et 107 sont tenues par deux tampons de pression 113 et 114 en matière élastomère.

Les deux mâchoires sont repoussées l'une par rapport à l'autre dans la position de fermeture, par un ressort de compression 115. Cette pince permet la mise en contact des pièces à assembler. Du fait qu'elle est indépendante, elle permet en outre, lorsque l'assemblage est effectué, de maintenir les pièces dans leurs positions respectives et de transporter l'assemblage sans modifier les positions relatives de ces pièces, hors de la machine à micro-déplacements, jusqu'à un autre poste de travail.

Ces dispositifs de saisie des pièces à assembler permettent l'accommodation de position de ces pièces, pour réaliser leur mise en contact sans compromettre la précision des réglages ultérieurs de position dans le plan de contact. Ce but est atteint par des moyens de déformation purement élastique.

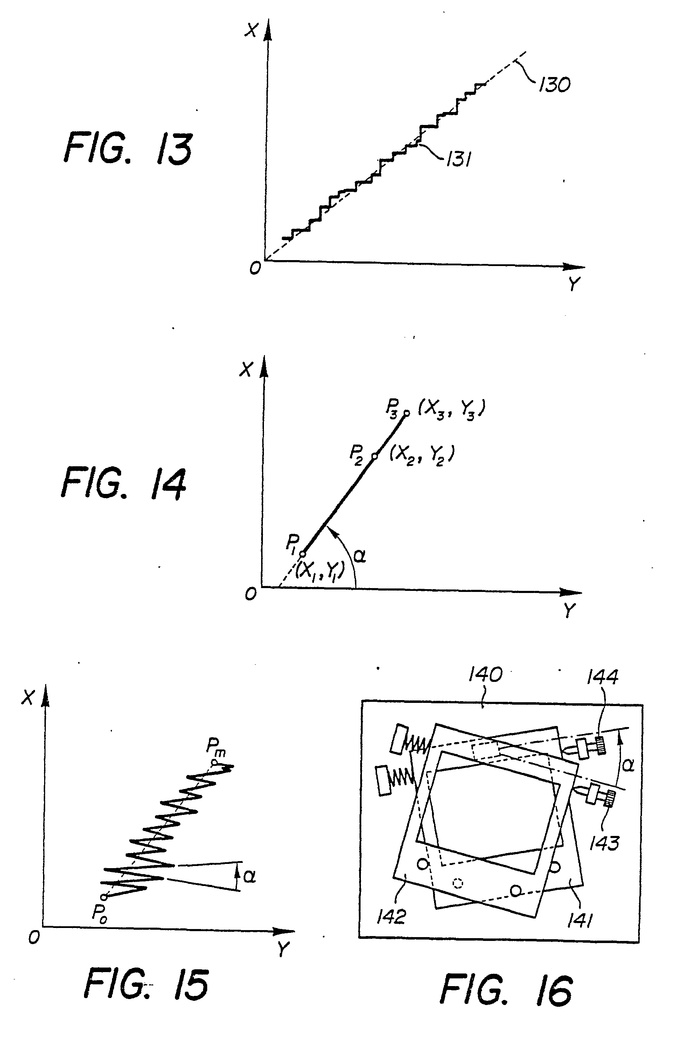

La fig. 13 illustre le déplacement par saccades de la pièce à positionner par rapport à l'autre. L'effet d'avance par saccades d'un système de translation mécanique intervient chaque fois qu'un effort de frottement statique s'oppose au mouvement. En partant d'une situation de repos, on actionne la vis micrométrique d'avance. A cause du frottement statique, les pièces à assembler refusent d'abord de glisser l'une sur l'autre. Les parties transmettant l'avance se tendent élastiquement sous l'effort. Lorsque ce dernier dépasse le seuil de résistance de la friction, le glissement s'amorce. En général, les forces de frottement en régime de glissement, pour que les faibles vitesses de déplacement, sont inférieures au seuil statique. Ainsi l'effort des pièces tendues n'est plus compensé et alimente le glissement ; après un certain déplacement, la tension des pièces transmettant l'avance se relâche et l'effort de frottement freine le glissement ; bientôt une nouvelle position d'équilibre est atteinte. Ainsi on a beau actionner la vis micrométrique de façon continue et très lentement, le mouvement d'avance de la pièce à assembler se fait par saccades, en sautant d'une position d'équilibre à la suivante.

Sur la fig. 13, on a porté en abscisses X la consigne de déplacement, c'est-à-dire l'avance de la vis à vitesse infiniment lente, et en ordonnées Y le déplacement effectif de la pièce à positionner. Le déplacement théorique en l'absence de frottements est représenté par la droite 130 représenté en trait interrompu et le déplacement effectif est illustré par la courbe en saccades 131.

Dans la pratique il arrive toutefois que l'on puisse tolérer des saccades selon une certaine ordonnée, par exemple des saccades de l'ordre du µm selon la coordonnée X, mais que la précision demandée sur la seconde coordonnée Y, soit beaucoup plus sévère, de l'ordre de 0,1 µm.

C'est le cas notamment des assemblages pour coupleurs de fibres monomodes par ondes évanescentes. Les fibres sont approchées tangentiellement et le couplage se fait dans le sens de la longueur des fibres. Les déplacements dans le sens de l'axe des fibres ne sont pas critiques ; en revanche, un déplacement de l'ordre du µm dans le sens transversal peut engendrer une variation du couplage comprise entre 10 et 50 %.

Le processus de déplacement utilisé dans le cadre des dispositifs décrits, est basé sur l'observation que les positions d'équilibre successives des saccades, sont essentiellement alignées selon la direction d'avance théorique. Ce phénomène est dû au fait que le frottement résulte du contact d'un très grand nombre d'aspérités microscopiques de forme aléatoire ; la somme des composantes des forces transmises par chaque aspérité selon la direction perpendiculaire à la direction d'avance est nulle, et les saccades se font ainsi selon la direction d'avance. Pour obtenir une translation de précision prédéterminée selon un axe de coordonnées, on combine des translations obliques par rapport à cet axe.

Le principe de la translation oblique est illustré par la fig. 14. Soit une translation à partir du point P1 de coordonnées X1, Y1. L'avance théorique est programmée au moyen de la vis micrométrique, pour arriver au point P2 des coordonnées X2, Y2. En raison des saccades du mouvement de déplacement, le point d'arrivée réel est P3, de coordonnées X3, Y3. La précision de l'avance est donnée par la distance $r_{2,3}$ séparant P2 de P3. La précision selon chacun des axes de coordonnées du plan de déplacement XY sera donnée par les expressions :

Précision selon Y : $\theta_y = Y3 - Y2 = r_{2,3} \sin\alpha$
Précision selon X : $\theta_x = X3 - X2 = r_{2,3} \cos\alpha$

où $\alpha$ représente l'angle $(\overrightarrow{OX}, \overrightarrow{P1P3})$.

Si l'angle $\alpha$ est petit, ces expressions sont assimilables à

$\theta_y = r_{2,3}$   avec $\alpha \ll 1$
$\theta_x = r_{2,3}$

On constate que la précision selon l'un des axes de translation peut devenir bien meilleure que l'incertitude $r_{2,3}$ sur le déplacement par saccades.

La fig. 15 montre comment on peut réaliser une translation quelconque dans le plan X, Y avec une précision de l'ordre de 1 µm selon l'axe X et une précision de l'ordre de 0,1 µm selon l'axe Y, pour des valeurs de $r_{2,3}$ = 1 µm et de $\alpha$ = 0,1 radian.

La translation totale $\overline{P_oP_m}$ est égale à la somme des translations élémentaires obliques. La précision est celle d'une translation élémentaire, et ne dépend pas du nombre de translations élémentaires puisque la valeur moyenne des erreurs de saccades est nulle (voir fig. 13).

En pratique, les translations obliques sont réalisées par un dispositif tel que représenté par la fig. 16 comportant une plaque de base sur laquelle sont montés deux modules de translation 141 et 142 disposés de telle manière que leurs axes forment entre eux un angle $\alpha$. Chacun de ces modules est associé à un mécanisme de commande du déplacement, par exemple une vis micrométrique, respectivement 143 et 144.

La combinaison de ces divers éléments permet de remplir les buts énoncés ci-dessus, soit d'assurer un micro-déplacement d'une des pièces à assembler et de programmer la précision des déplacements de la pièce mobile.

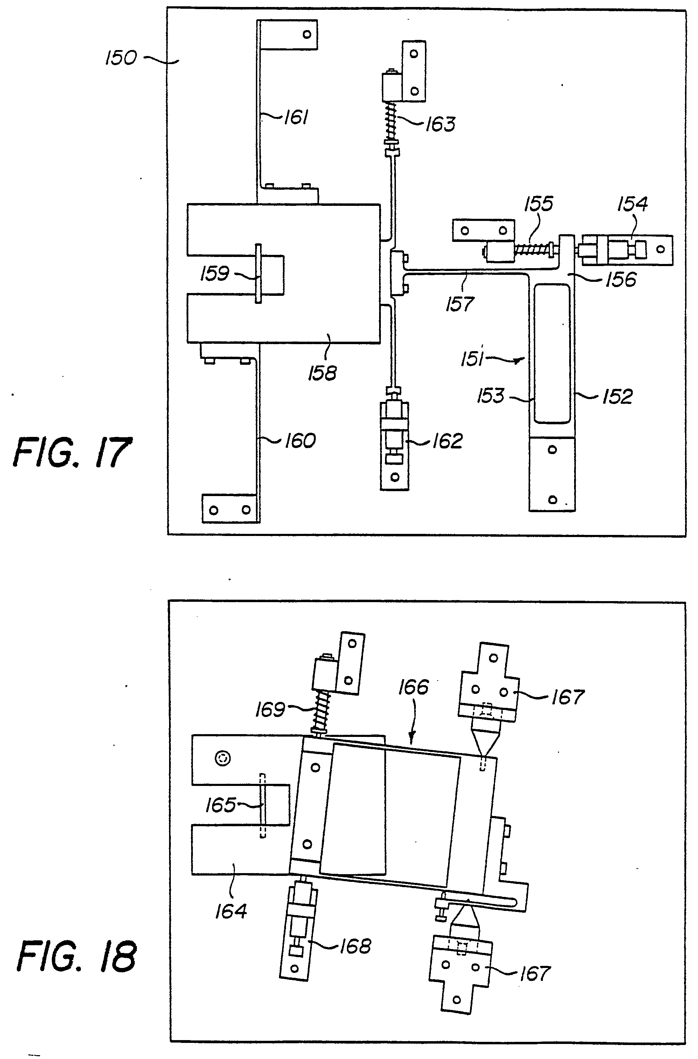

Un exemple d'une telle combinaison est illustré par les figures 17 et 18 illustrant un dispositif comportant divers modules de déplacement et des moyens pour permettre la translation oblique d'une pièce par rapport à l'autre.

Ce dispositif comprend une plaque de base 150 sur laquelle est monté un module de translation 151 comportant deux lames élastiques parallèles 152 et 153 associées à un mécanisme de commande des déplacements comprenant une vis micrométrique 154 et une butée mobile 155. La plaque mobile 156 de ce module porte une lame élastique 157, perpendiculaire aux lames 151 et 153, et dont une extrémité est fixée à la plaque support 158. Cette plaque portant une des pièces 159 à positionner est par ailleurs supportée par les deux lames élastiques 160 et 161 qui forment, avec la lame 157 un module de rotation commandé par une vis micrométrique 162 associée à une butée mobile 163. L'ensemble constitue une combinaison d'un module de rotation et d'un module de translation.

La fig. 18 représente le sous-ensemble supérieur de ce dispositif. Il se compose d'une plaque mobile 164 portant la seconde pièce mobile 165 à positionner par rapport à la première. Cette plaque est solidaire d'un module de translation 166 monté sur deux pivots 167 pour faciliter la mise en place des pièces 159 et 165. Ce module de translation est commandé par une vis micrométrique 168 associée à une butée mobile 169. Il est par ailleurs monté obliquement par rapport au sous-ensemble inférieur, pour permettre d'effectuer des translations obliques.

Il est bien évident que d'autres combinaisons de modules de translation et de rotation peuvent être imaginées en fonction des assemblages à réaliser. Certains modules peuvent être remplacés par d'autres, de manière à permettre la réalisation de combinaisons différentes selon les besoins.

**Revendications**

1. Procédé pour positionner une première pièce telle que par exemple une fibre optique, par rapport à une seconde pièce, telle que par exemple un autre composant optique, dans lequel on monte la première pièce sur un premier support et la seconde pièce sur un second support, caractérisé en ce que, pour assurer les déplacements d'au moins un des supports, on utilise une combinaison d'un module de translation (51 à 55) comportant deux lames élastiques parallèles entre elles, et d'un module de rotation (56 à 60) comportant deux lames disposées selon des directions convergentes.

2. Procédé selon la revendication 1, caractérisé en ce que l'on contrôle la précision de l'avance par saccades d'au moins une des pièces par rapport à l'autre en effectuant une translation oblique de cette pièce par rapport à l'autre.

3. Procédé selon la revendication 1, caractérisé en ce que l'on prévoit des moyens (92, 100, 102) pour permettre l'accommodation de la position de l'une des pièces par rapport à l'autre, selon une direction perpendiculaire au plan de déplacement relatif de ces pièces.

4. Procédé selon la revendication 3, caractérisé en ce que les moyens d'accommodation comportent une membrane élastique (92).

5. Procédé selon la revendication 3, caractérisé en ce que les moyens d'accommodation comportent des lames de saisie (100, 102) déformables élastiquement selon une de leurs dimensions.

6. Dispositif pour la mise en œuvre du procédé selon la revendication 1, comportant un bâti, un premier support portant une première pièce telle que par exemple une fibre optique, un second support portant la seconde pièce telle que par exemple un second composant optique et des organes agencés pour permettre le déplacement de l'un des supports relativement à l'autre, caractérisé en ce que l'un au moins des deux supports est relié au bâti par une combinaison d'un module de translation (51 à 55) comprenant deux lames (12, 13) déformables élastiquement selon une de leurs dimensions, et disposées parallèlement entre elles, et d'un module de rotation (56 à 60) comprenant deux lames (25, 26) déformables élastiquement selon une de leurs dimensions et disposées selon deux directions convergentes.

7. Dispositif selon la revendication 6, caractérisé en ce que l'articulation à déformation purement élastique comporte au moins deux modules de translation (141, 142) disposés obliquement l'un par rapport à l'autre pour permettre d'effectuer un déplacement relatif en translation oblique.

8. Dispositif selon la revendication 6, caractérisé en ce que l'une des pièces est montée sur un support par l'intermédiaire d'un organe (92) permettant une accommodation relative des pièces à positionner selon une direction perpendiculaire au plan de leur déplacement relatif.

9. Dispositif selon la revendication 8, caractérisé en ce que l'organe d'accommodation est constitué par une membrane élastique (92).

10. Dispositif selon la revendication 8, caractérisé en ce que l'organe d'accommodation est constitué par au moins deux lames de saisie (100, 102) à déformation purement élastique selon une des dimensions de ces lames, l'une (102) au moins de ces lames de saisie étant fixée directement au support, et chaque autre lame de saisie étant fixée au support par l'intermédiaire d'un module de translation à déformation élastique dont la direction de translation est parallèle à l'orientation de ladite autre lame de saisie.

**Claims**

1. Method for the positioning of a first component such as an optical fibre with respect to a second component such as an another optical component, in which the first and the second component are mounted onto a first and a second support means respectively, characterized in that a combination of a translation module (51 to 55) comprising two elastic strips parallel to each other, and a rotation module (56 to 60) comprising two strips arranged in a manner so as to converge with each other, is used for moving at least one of the support means.

2. Method according to claim 1, characterized in that the precision of the jolt movement of at least one component with respect to the other is controlled by executing an oblique translation of this component with respect to the other.

3. Method according to claim 1, characterized in that means (92, 100, 102) are provided to permit adjustment of one component with respect to the other along a direction perpendicular to the plane of relative movement of these components.

4. Method according to claim 3, characterized in that the adjustment means comprises an elastic membrane (92).

5. Method according to claim 3, characterized in that the adjustment means comprises holding strips (100, 102) elastically deformable along one of their dimensions.

6. Device for use of the method according to claim 1, comprising a frame, a first support means

7

carrying a first component such as an optical fibre, a second support means carrying the second component such as a second optical component and means provided for permitting the movement of one of the support means in relation to the other, characterized in that at least one of the two supports means is joined to the frame by a combination of a translation module (51 to 55) comprising two strips (12, 13) elastically deformable along one of their dimensions and parallel to each other, and a rotation module (56 to 60) comprising two strips (25, 26) elastically deformable along one of their dimensions and arranged in a manner so as to converge which each other.

7. Device according to claim 6, characterized in that the elastically deformable joint comprises at least two translation modules (141, 142) arranged obliquely to each other to permit a relative movement in oblique translation.

8. Device according to claim 6, characterized in that one of the components is mounted on a support means via means (92) permitting a relative adjustment of the components to be positioned along a direction perpendicular to the plane of their relative movement.

9. Device according to claim 8, characterized in that the adjustment means consists of an elastic membrane.

10. Device according to claim 8, characterized in that the adjustment means consists of at least two holding strips (100, 102) which are elastically deformable along one of the dimensions of these strips, at least one (102) of these holding strips being directly fixed on the support means and each other holding strip being fixed on the support means via a translation module having an elastic strain, whose direction of translation is parallel with the direction of the other said holding strip.


## Patentansprüche

1. Verfahren zur Positionierung eines ersten Teils wie z. B. eine optische Faser, in Bezug auf ein zweites Teil, wie z. B. ein anderes optisches Bestandteil, in welchem man das erste Teil auf einem ersten Träger und das zweite Teil auf einem zweiten Träger montiert, dadurch gekennzeichnet, daß man zur Gewährleistung der Verschiebungen von mindestens einem der Träger eine Kombination verwendet, bestehend aus einem Verschiebemodul (51-55), welches zwei zueinander parallele elastische Lamellen aufweist und einem Drehmodul (56-60), welches zwei konvergierend angeordnete Lamellen aufweist.

2. Verfahren nach Anspruch 1, dadurch gekennzeichnet, daß man die Genauigkeit der ruckweisen Vorwärtsbewegung von mindestens einem der Teile in Bezug auf das andere dadurch kontrolliert, daß man dieses Teil in Bezug auf das andere eine Schrägbewegung ausführen läßt.

3. Verfahren nach Anspruch 1, dadurch gekennzeichnet, daß man Mittel (92, 100, 102) vorsieht, um die Position eines der Teile in Bezug auf das andere in einer Richtung anpassen zu können, die senkrecht zur Ebene der relativen Verschiebung dieser Teile steht.

4. Verfahren nach Anspruch 3, dadurch gekennzeichnet, daß die Mittel zur Anpassung eine elastische Membrane (92) aufweisen.

5. Verfahren nach Anspruch 3, dadurch gekennzeichnet, daß die Mittel zur Anpassung Klemmlamellen (100, 102) aufweisen, die nach einer ihrer Hauptabmessungen elastisch verformbar sind.

6. Vorrichtung zur Durchführung des Verfahrens nach Anspruch 1, die folgendes aufweist: Ein Unterteil, einen ersten Träger, der ein erstes Teil wie z. B. eine optische Faser trägt, einen zweiten Träger, der das zweite Teil, wie z. B. ein zweites optisches Bestandteil trägt, und Einrichtungen die dazu dienen, die Verschiebung eines der Träger im Bezug auf den anderen zu ermöglichen, dadurch gekennzeichnet, daß mindestens der eine der zwei Träger mit dem Unterteil über eine Kombination verbunden ist, bestehend aus einem Verschiebemodul (51-55), welches zwei nach einer ihrer Hauptabmessungen elastisch verformbare und parallel zueinander stehende Lamellen (12, 13) aufweist, und einem Drehmodul (56-60), welches zwei nach einer ihrer Hauptabmessungen elastisch verformbare und konvergierend angeordnete Lamellen (25, 26) aufweist.

7. Vorrichtung nach Anspruch 6, dadurch gekennzeichnet, daß der auf rein elastischer Verformung basierende Schwenkmechanismus mindestens zwei schräg zueinander angeordnete Verschiebemodule (141, 142) aufweist, um das Ausführen einer relativen Bewegung in Form einer Schrägverschiebung zu ermöglichen.

8. Vorrichtung nach Anspruch 6, dadurch gekennzeichnet, daß das eine der Teile auf dem Träger mittels eines Organs (92) montiert ist, das eine relative Anpassung der zu positionierenden Teile in einer zur Ebene ihrer relativen Verschiebung senkrechten Richtung gestattet.

9. Vorrichtung nach Anspruch 8, dadurch gekennzeichnet, daß das Anpaßorgan aus einer elastischen Membrane (92) besteht.

10. Vorrichtung nach Anspruch 8, dadurch gekennzeichnet, daß das Anpaßorgan aus mindestens zwei Klemmlamellen (100, 102) besteht, die sich rein elastisch nach einer der Hauptabmessungen dieser Lamellen verformen, wobei mindestens die eine (102) dieser Klemmlamellen direkt auf dem Träger befestigt ist, und jede andere Klemmlamelle mittels eines Verschiebemoduls für elastische Verformung auf dem Träger befestigt und dessen Verschieberichtung parallel zur Lage der anderen Klemmlamelle ist.

FIG. 1

FIG. 2

FIG. 3

FIG. 4

**FIG. 5**

**FIG. 6**

**FIG. 7**

**FIG. 8**

**FIG. 9**

FIG. 10

FIG. II

FIG. 12

3

FIG. 13

FIG. 14

FIG. 15

FIG. 16

4

FIG. 17

FIG. 18